# EUROPÄISCHE PATENTANMELDUNG

(11) **EP 2 187 003 A2**
(43) Veröffentlichungstag der Anmeldung: **19.05.2010**
(21) Anmeldenummer: 09013709.2
(22) Anmeldetag: 30.10.2009
(51) Int. Cl.: F01D 25/18, F02C 7/06, F02C 6/18, F02C 7/32, F01M 5/00

(54) **Fluggasturbinen-Ölerwärmungssystem**

(30) Priorität: 18.11.2008 DE 102008057828
(71) Anmelder: Rolls-Royce Deutschland Ltd & Co KG, 15827 Blankenfelde-Mahlow (DE)
(72) Erfinder: Angst, Robert, 13347 Berlin (DE)
(74) Vertreter: Weber, Joachim

(57) **Zusammenfassung**

Die Erfindung bezieht sich auf eine Fluggasturbinen-Ölvorwärmvorrichtung mit einer mit einem Öltank 1 einer Fluggasturbine verbindbaren Saugleitung 2, mit einer vom Flugzeug unabhängigen, mit der Saugleitung 2 verbundenen Wärmequelle 3 und mit einer mit der Wärmequelle 3 verbundenen und mit dem Öltank 1 verbindbaren Rückführleitung 4, sowie ein mittels der Vorrichtung durchführbares Verfahren.

## Beschreibung

Die Erfindung bezieht sich auf eine Fluggasturbinen-Ölvorwärmvorrichtung sowie auf ein Fluggasturbinen-Ölvorwärmverfahren.

Es ist bekannt, dass Fluggasturbinen (Flugzeugtriebwerke) auch unter sehr ungünstigen Umweltbedingungen gestartet werden müssen. Hierzu zählen insbesondere sehr niedrige Außentemperaturen. Bei derartigen Außentemperaturen ist auch das Öl in dem Ölsystem der Gasturbine entsprechend kalt und weist niedrige Temperaturen auf, bei welchen die Viskosität des Öls stark ansteigt. Um Lagerschäden zu vermeiden und um weitere Komponenten des Flugzeugs und/oder der Fluggasturbine nicht zu beschädigen, ist, bezogen auf die Ölsorte, eine niedrigste zugelassene Starttemperatur für das Ölsystem festgelegt.

Diese niedrigste zugelassene Starttemperatur für das Ölsystem ist in manchen Fällen höher, als die niedrigste zu befürchtende Umgebungstemperatur oder als die real vorliegende Umgebungstemperatur. Infolgedessen ist es ohne zusätzliche Maßnahmen nicht möglich, die Fluggasturbine zu starten.

Der Stand der Technik zeigt unterschiedlichste Verfahren, um das Öl des Ölsystems und/oder die gesamte Fluggasturbine vor dem Start zu erwärmen. So ist es beispielsweise bekannt, mittels externer Heißluftgebläse das Triebwerk anzuwärmen oder Heißluft aus einer Hilfsgasturbine (APU) zu verwenden. Zusätzlich zeigt der Stand der Technik auch elektrische Öltankheizungen, die in das Flugzeug oder die Fluggasturbine eingebaut sind.

Aus der US-A-5 558 303 ist es bekannt, den in den Tragflächen befindlichen Treibstoff mittels einer externen Vorrichtung zu erwärmen und auf diese Weise die Tragflächen zu enteisen.

Ohne derartige zusätzliche Vorrichtungen zum Aufwärmen des Ölsystems ist somit kein Start der Fluggasturbine möglich, es ist unter Umständen auch ausgeschlossen, diese selbst im Leerlauf in Drehung zu versetzen (Crank).

Die aus dem Stand der Technik bekannten Vorrichtungen erhöhen entweder das Gewicht der Fluggasturbine (des Triebwerks), so beispielsweise eingebaute Heizungen, oder sie erreichen nicht unmittelbar das Öl, so beispielsweise bei Heißluft, die in den Fan geblasen wird. Weiterhin ist ein hoher Materialeinsatz erforderlich, da beispielsweise als Heißluftgebläse auch kleinere Hilfstriebwerke eingesetzt werden. Ein weiterer Nachteil besteht darin, dass zusätzliche Einbauten oder Modifikationen an der Fluggasturbine oder am Flugzeug erforderlich sind, welche wiederum zu erhöhten Kosten und zu erhöhtem Gewicht führen.

Der Erfindung liegt die Aufgabe zugrunde, eine Vorrichtung sowie ein Verfahren zu schaffen, welche bei einfachem Aufbau und einfacher, kostengünstiger Anwendbarkeit bei geringem Gewicht und einfacher Handhabung eine zuverlässige Vorwärmung des Ölsystems ermöglichen.

Erfindungsgemäß wird die Aufgabe durch die Merkmalskombinationen der unabhängigen Ansprüche gelöst, die jeweiligen Unteransprüche zeigen weitere vorteilhafte Ausgestaltungen der Erfindung.

Erfindungsgemäß ist somit vorgesehen, dass aus einem Öltank einer Flugzeuggasturbine oder eines Flugzeugs mittels einer Saugleitung kaltes Öl entnommen wird. Dieses kalte Öl wird mittels einer mit der Saugleitung verbundenen Wärmequelle erwärmt und über eine Rückführleitung in den Öltank zurückgeführt. Erfindungsgemäß liegt somit ein sehr einfaches System vor, welches keine zusätzlichen Einbaumaßnahmen an einem Flugzeug oder einer Fluggasturbine erfordert, da die Absaugung des Öls und dessen Rückführung in bevorzugter Weise beispielsweise über eine Öleinfüllöffnung oder eine Ölablassöffnung erfolgen kann.

Das erfindungsgemäße System zeichnet sich auch durch eine hohe Betriebssicherheit aus, da keine Wärmequellen oder Heizungen direkt in das Flugtriebwerk, die Fluggasturbine oder das Flugzeug eingebaut werden muss. Vielmehr kann die erfindungsgemäße Wärmequelle extern aufgestellt werden. Durch die einfache Möglichkeit zum Anschluss an den Öltank ist es möglich, die gesamte Vorrichtung entweder extern zu stationieren oder im Frachtraum des Flugzeuges mitzuführen.

Erfindungsgemäß ist es möglich, das Öl entweder bis zur minimal zulässigen Starttemperatur zu erwärmen oder auch auf eine höhere Temperatur zu bringen.

In besonders günstiger Ausgestaltung der Erfindung ist vorgesehen, dass die Vorrichtung über eine zusätzliche Pumpe verfügt, welche beispielsweise in der Saugleitung angeordnet ist und zur Umwälzung des Öls beiträgt. Auch kann ein zusätzlicher Speichertank vorgesehen sein, beispielsweise in der Saugleitung oder in der Rückführleitung.

Mittels einer Temperaturregel-/Steuereinrichtung wird die Temperatur überwacht, so dass die Wärmeabgabe der Wärmequelle sowie die Aufwärmzeit des Öls entsprechend geregelt oder gesteuert werden können.

Die externe Wärmequelle kann unterschiedliche Energiequellen verwenden, beispielsweise Gas, Kerosin, Elektrizität oder Heißluft. Somit ist es erfindungsgemäß möglich, die Wärmequelle entweder gänzlich unabhängig zu betreiben oder mit einer Hilfsturbine (APU) oder einem bereits laufenden Triebwerk zu koppeln.

Das erfindungsgemäße System kann in bevorzugter Ausgestaltung der Erfindung klein und mobil ausgebildet sein, es kann kurzzeitig eingesetzt werden oder über einen längeren Zeitraum, beispielsweise über Nacht, betrieben werden, um ein zu starkes Abkühlen des Ölsystems bereits vorbeugend zu verhindern.

Durch die Möglichkeit, einen Speichertank vorzusehen, ist es möglich, ein heißes vorgehaltenes Ölvolumen durch das Leitungssystem der Fluggasturbine oder des Triebwerks zu führen, um auf diese Weise auch andere Komponenten, beispielsweise Pumpen oder Ölfilter, zu erwärmen.

Durch die externe Ausgestaltung der erfindungsgemäßen Vorrichtung ist es möglich, diese lediglich dort einzusetzen, wo sie wirklich benötigt wird. Einbauten an Flugzeugen, die üblicherweise nicht in tiefen Temperaturgebieten betrieben werden, können somit entfallen. Auch hierdurch erniedrigen sich die Gesamtkosten und es ergibt sich ein geringeres Gewicht des Flugzeugs.

In besonders günstiger Weise ist es erfindungsgemäß möglich, eine Öleinfüllöffnung des Öltanks zum Absaugen bzw. Rückführen zu verwenden. Es ist somit nicht erforderlich, am Flugzeug oder am Triebwerk selbst Umbauten oder Modifikationen vorzunehmen.

Durch leichtes Drehen des Triebwerks (Cranken) ist es möglich, nach einer Erwärmung des Öls in einem Öltank auch die weiteren Leitungen mit erwärmtem Öl zu spülen und somit die weiteren Hilfskomponenten (beispielsweise Pumpen) zu erwärmen.

Im Folgenden wird die Erfindung anhand eines Ausführungsbeispiels in Verbindung mit der Zeichnung beschrieben. Dabei zeigt:

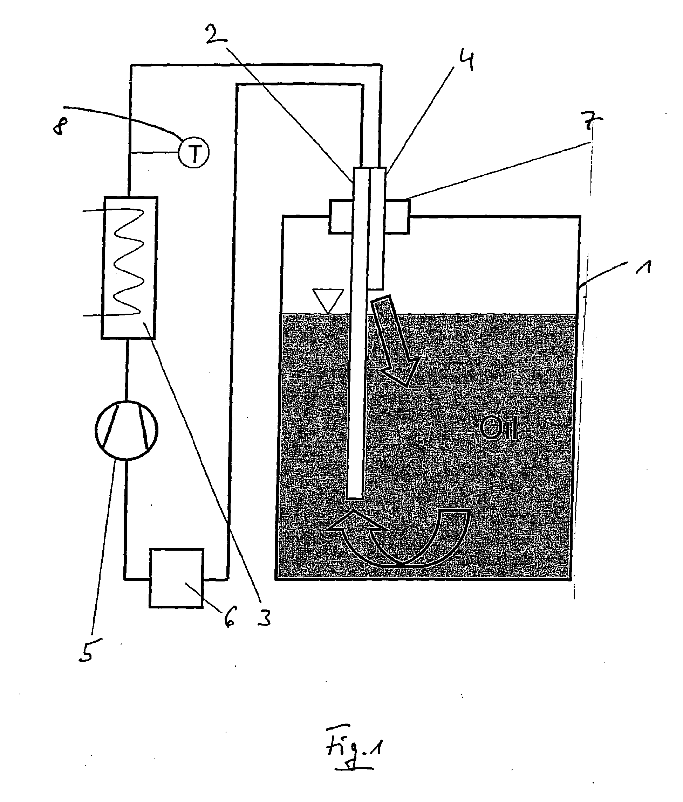

- Fig. 1: eine schematische Darstellung des erfindungsgemäßen Systems.

Die Fig. 1 zeigt in sehr schematischer Weise einen Öltank 1, welcher sich beispielsweise in einem Flugzeug oder einer Fluggasturbine befinden kann. Mittels einer Saugleitung 2, welche rohrförmig ausgebildet ist und beispielsweise durch einen Öleinfüllstutzen 7 in den Öltank 1 eingesteckt wird, wird Öl abgesaugt. Das Absaugen erfolgt beispielsweise vom Bodenbereich des Öltanks 1.

Durch die Saugleitung 2 wird Öl bei dem Ausführungsbeispiel über einen Speichertank 6 und eine Pumpe 5 einer Wärmequelle 3 zugeführt.

Mittels der Wärmequelle 3, welche beispielsweise ein Wärmetauscher, eine Heizvorrichtung oder Ähnliches sein kann, wird das Öl erwärmt und über eine Rückführleitung 4 in den Öltank 1 zurückgeleitet. Die Rückführleitung 4 kann in ihrem Endbereich parallel oder einstückig mit der Saugleitung 2 ausgebildet sein. Sie kann eine unterschiedliche Länge haben, so dass das heiße, rückgeführte Öl in dem oberen Bereich des Öltanks 1 eingeleitet wird.

Bei dem gezeigten Ausführungsbeispiel ist eine TemperaturRegel-/Steuereinrichtung 8 vorgesehen, um die Erwärmung des Öls zu steuern bzw. zu regeln.

### Bezugszeichenliste

- 1: Öltank
- 2: Saugleitung
- 3: Wärmequelle
- 4: Rückführleitung
- 5: Pumpe
- 6: Speichertank
- 7: Öleinfüllstutzen
- 8: Temperaturregel-/Steuereinrichtung

## Patentansprüche

1. Fluggasturbinen-Ölvorwärmvorrichtung mit einer mit einem Öltank (1) einer Fluggasturbine verbindbaren Saugleitung (2), mit einer vom Flugzeug unabhängigen, mit der Saugleitung (2) verbundenen Wärmequelle (3) und mit einer mit der Wärmequelle (3) verbundenen und mit dem Öltank (1) verbindbaren Rückführleitung (4).

2. Vorrichtung nach Anspruch 1 mit einer Pumpe (5), welche in der Saugleitung (1) und/oder der Rückführleitung (4) angeordnet ist.

3. Vorrichtung nach Anspruch 1 oder 2 mit einem Speichertank (6), welcher in der Saugleitung (1) und/oder der Rückführleitung (4) angeordnet ist.

4. Vorrichtung nach einem der Ansprüche 1 bis 3, mit einer Temperaturregel-/ Steuereinrichtung (8).

5. Vorrichtung nach einem der Ansprüche 1 bis 4, wobei die Saugleitung (2) und die Rückführleitung (4) zumindest an ihrem Endbereich miteinander verbunden sind.

6. Fluggasturbinen-Ölvorwärmverfahren, wobei Öl aus einem einer Fluggasturbine zugeordneten Öltank (1) abgesaugt, mittels einer externen Wärmequelle (3) erwärmt und in den Öltank (1) rückgeführt wird.

7. Verfahren nach Anspruch 6, wobei das Öl an einem von dem Entnahmeort getrennten Ort in den Öltank (1) rückgeführt wird.

8. Verfahren nach Anspruch 6 oder 7, wobei das Öl aus einer Oleinfüllöffnung entnommen und durch diese wieder rückgeführt wird.

9. Verfahren nach Anspruch 6 oder 7, wobei das Öl aus einer Ölablassöffnung entnommen und durch diese wieder rückgeführt wird.

10. Verfahren nach Anspruch 6 bis 9, wobei die Öltemperatur geregelt/gesteuert wird.

11. Verfahren nach einem der Ansprüche 6 bis 10, wobei die Fluggasturbine zur Versorgung von Komponenten des Ölversorgungssystems mit erwärmtem Öl in geringe Drehzahl versetzt wird.

12. Verfahren nach einem der Ansprüche 6 bis 11, wobei dieses unter Verwendung einer Vorrichtung nach den Ansprüchen 1 bis 5 durchgeführt wird.
